(19) **Europäisches Patentamt European Patent Office Office européen des brevets**

(11) **EP 2 132 474 B1**

(12) **FASCICULE DE BREVET EUROPEEN**

(45) Date de publication et mention de la délivrance du brevet:
**16.03.2011 Bulletin 2011/11**

(21) Numéro de dépôt: **08788147.0**

(22) Date de dépôt: **09.04.2008**

(51) Int Cl.:
*F16L 13/02* (2006.01)    *F16L 25/00* (2006.01)
*E21B 17/01* (2006.01)

(86) Numéro de dépôt international:
**PCT/FR2008/050625**

(87) Numéro de publication internationale:
**WO 2008/139116 (20.11.2008 Gazette 2008/47)**

(54) **PROCEDE DE REALISATION DE CONDUITE SOUS-MARINE COMPRENANT LE MARTELAGE DE SOUDURES D'ASSEMBLAGE A L'INTERIEUR DE LA CONDUITE**

VERFAHREN ZUR HERSTELLUNG EINER UNTERWASSERLEITUNG MIT EINHÄMMERUNG DER MONTAGESCHWEISSSTELLEN IN DIE LEITUNG

METHOD FOR PROVIDING AN UNDERWATER DUCT COMPRISING HAMMERING THE ASSEMBLY WELDS INSIDE THE DUCT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.04.2007 FR 0754425**

(43) Date de publication de la demande:
**16.12.2009 Bulletin 2009/51**

(73) Titulaires:
• **SAIPEM S.A.**
  **78180 Montigny-le-Bretonneux (FR)**
• **SONATS - Société des Nouvelles Applications des**
  **Techniques de Surfaces**
  **44470 Carquefou (FR)**

(72) Inventeurs:
• **KERDILES, Eric**
  **F-78770 Marcq (FR)**
• **DUCHAZEAUBENEIX, Jean-Michel**
  **F-44840 Les Sorinieres (FR)**
• **JACOB, Philippe**
  **F-44700 Orvault (FR)**
• **CHEPPE, Patrick**
  **F-44115 Basse Goulaine (FR)**

(74) Mandataire: **Domange, Maxime et al**
  **Cabinet Beau de Lomenie**
  **232, avenue du Prado**
  **13295 Marseille Cedex 08 (FR)**

(56) Documents cités:
FR-A- 867 880      FR-A- 2 428 782
GB-A- 2 088 513    US-A- 4 559 085

## Description

La présente invention concerne un procédé de réalisation de conduites sous-marines destinées à véhiculer des fluides corrosifs et notamment de l'eau, comprenant l'assemblage par soudage d'éléments unitaires de conduite.

La présente invention concerne plus particulièrement une installation de liaison de subsurface entre un support flottant et une bouée de chargement de pétrolier.

La présente invention concerne plus particulièrement une installation de liaison fond-surface comprenant au moins une conduite sous-marine assurant la liaison entre un support flottant et le fond de la mer notamment à grande profondeur. Ces conduites sous-marines sont appelées "colonnes montantes" ou "risers" comme explicité ci-après, ces risers étant constitués d'éléments tubulaires unitaires soudés entre eux bout à bout, réalisés en acier.

Plus particulièrement, la présente invention a pour objet une conduite sous-marine du type riser assurant la liaison entre un support flottant et le fond de la mer, ledit riser étant constitué par une conduite rigide de type caténaire s'étendant depuis ledit support flottant jusqu'à un point de contact au fond de la mer.

Le secteur technique de l'invention est donc le domaine de la fabrication et de l'installation de conduites sous-marines et plus particulièrement de liaisons fond-surface de production pour l'extraction sous-marine de pétrole, de gaz ou autre matériau soluble ou fusible, ou d'une suspension de matière minérale, à partir de tête de puits immergé pour le développement de champs de production installés en pleine mer au large des côtes. L'application principale et immédiate de l'invention étant dans le domaine de la production pétrolière, ainsi que dans la ré-injection d'eau et la production ou ré-injection de gaz.

Un support flottant comporte en général des moyens d'ancrage pour rester en position malgré les effets des courants, des vents et de la houle. Il comporte aussi en général des moyens de forage, de stockage et de traitement du pétrole ainsi que des moyens de déchargement vers des pétroliers enleveurs, ces derniers se présentant à intervalle régulier pour effectuer l'enlèvement de la production. L'appellation de ces supports flottants est le terme anglo-saxon "Floating Production Storage Offloading" (signifiant "moyen flottant de stockage, de production et de déchargement") dont on utilisera le terme abrégé "FPSO" dans l'ensemble de la description suivante, ou encore "FDPU" ou "Floating Drilling & Production Unit" (signifiant "moyen flottant de forage et de production"), lorsque le support flottant est aussi utilisé pour effectuer les opérations de forage avec puits dévié dans la hauteur de la tranche d'eau.

Une conduite sous-marine, ou un riser, selon l'invention peuvent être soit un "conduite de production" de pétrole brut ou de gaz, soit un conduite d'injection d'eau, assurant la liaison avec une tête de puits sous-marine installée au fond de la mer, soit encore un "riser de forage" assurant la liaison entre le support flottant et une tête de puits localisée au fond de la mer.

Dans les FPSO où l'on installe en général une multiplicité de lignes, on est amené à mettre en oeuvre soit des liaisons fond-surface de type tour-hybride, soit des liaisons de type caténaire en forme de "chaînette".

Lorsque la conduite de liaison fond-surface est du type caténaire, elle assure directement la liaison entre un support flottant et un point de contact au fond de la mer qui se trouve décalé par rapport à l'axe dudit support, ladite conduite prend de par son propre poids une configuration dite de "chaînette", formant une courbe dont le rayon de courbure diminue depuis la surface jusqu'au point de contact au fond de la mer, et l'axe de ladite conduite forme un angle $\alpha$ avec la verticale dont la valeur varie en général de 10 à 20 degrés au niveau du support flottant jusqu'à, théoriquement, 90 degrés au niveau du fond de la mer correspondant à une position théorique sensiblement tangentielle à l'horizontale comme il sera explicité ci-après.

Les liaisons de type chaînette sont en général réalisées à l'aide de conduites flexibles, mais leur coût est extrêmement élevé en raison de structure complexe de la conduite.

Ainsi on a été amené à développer des colonnes montantes sensiblement verticales, de manière à rapprocher de la surface la liaison souple en configuration de chaînette vers le support flottant, ce qui permet de minimiser la longueur de ladite conduite flexible, ainsi que les efforts qui lui sont appliqués, minimisant ainsi considérablement son coût.

Dès lors que la profondeur d'eau atteint et dépasse 800-1000m, il devient possible de réaliser ladite liaison fond-surface à l'aide d'une conduite rigide à paroi épaisse, car la longueur de la conduite étant considérable, sa souplesse permet d'obtenir une configuration de chaînette satisfaisante en restant dans des limites de contraintes acceptables.

Ces risers rigides en matériaux résistants de forte épaisseur, en configuration de chaînette, sont communément appelés par le terme anglo-saxon "Steel Catenary Riser" signifiant "riser en acier en forme de chaînette" dont on utilisera le terme abrégé "SCR" ou "riser caténaire" dans la présente description, qu'il soit en acier ou en autre matériau tel qu'un matériau composite.

Ces "SCR" ou "risers caténaires" sont beaucoup plus simples à réaliser que les conduites flexibles et donc moins onéreux.

La courbe géométrique formée par une conduite de poids uniforme en suspension soumise à la gravité, appelée "chaînette" est une fonction mathématique de type cosinus hyperbolique ($Coshx = (e^x + e^{-x})/2$, reliant l'abscisse et l'ordonnée d'un point quelconque de la courbe selon les formules suivantes :

$$y = R_0(\cosh(x/R_0) - 1)$$

$$R = R_0.(Y/R_0 + 1)^2$$

dans lesquelles :

- x représente la distance dans la direction horizontale entre ledit point de contact et un point M de la courbe,

- y représente l'altitude du point M (x et y sont donc les abscisses et ordonnées d'un point M de la courbe par rapport à un repère orthonormé dont l'origine est audit point de contact)

- $R_0$ représente le rayon de courbure au dit point de contact, c'est à dire au point de tangence horizontale.

- R représente le rayon de courbure au point M (x, y)

Ainsi, la courbure varie le long de la chaînette depuis la surface, ou son rayon a une valeur maximale $R_{max}$, jusqu'au point de contact, ou son rayon a une valeur minimale $R_{min}$ (ou $R_0$ dans la formule ci-dessus). Sous l'effet des vagues, du vent et du courant, le support de surface se déplace latéralement et verticalement, ce qui a pour effet de soulever ou de reposer la conduite en forme de chaînette, au niveau du fond de la mer.

Ainsi, la conduite présente un rayon de courbure qui est maximal au sommet de la chaînette, en général, d'au moins 1500, notamment de 1500 à 5000m, c'est à dire au point de suspension sur le FPSO, et qui décroît jusqu'au point de contact avec le sol. A cet endroit, le rayon de courbure est minimal dans la portion en suspension. Mais, dans la partie adjacente reposant sur le fond de la mer, ladite conduite étant théoriquement en ligne droite, son rayon de courbure est théoriquement infini. En fait ledit rayon n'est pas infini mais extrêmement élevé, car il subsiste une courbure résiduelle.

Ainsi, au gré des mouvements du support flottant en surface, le point de contact se déplace d'avant en arrière et, dans la zone soulevée ou reposée sur le fond, le rayon de courbure passe successivement d'une valeur minimale $R_{min}$ à une valeur extrêmement élevée, voire infinie dans le cas d'une configuration théorique où la conduite sous-marine repose sur le fond de la mer sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

De plus, on observe que durant ces mouvements alternatifs du point de contact, la raideur de la conduite, associée à la courbure résiduelle mentionnée précédemment, va dans le temps creuser un sillon sur toute la longueur soulevée puis reposée et créer une zone de transition dans laquelle existera un point d'inflexion où le rayon de courbure, minimal en pied de chaînette, changera alors de sens dans ladite zone de transition, et croîtra pour atteindre enfin une valeur infinie dans la portion de conduite sous-marine reposant en ligne droite sur le fond de la mer.

Ces mouvements répétés sur de longues périodes créent un sillon d'autant plus important dans les sols peu consolidés que l'on rencontre couramment en grande profondeur, ce qui a pour effet de modifier la courbure de la chaînette et conduire, si le phénomène s'amplifie, à des risques d'endommagement des conduites, soit au niveau des conduites sous-marines reposant au fond de la mer, soit au niveau des SCR assurant la liaison entre ces conduites sous-marines reposant au fond de la mer et la surface.

Ces conduites sont réalisées par soudage bout à bout d'éléments unitaires de conduite. Les éléments unitaires de conduite sont eux-mêmes assemblés sous forme de rame, en général de deux à quatre éléments unitaires soudés bout à bout, puis transporté en mer. Et, de façon connue, ces rames sont assemblées par soudage les unes aux autres en mer à partir d'un navire de pose de conduite, notamment au niveau d'une tour de pose en J. Les soudures d'assemblage sont réalisées de préférence et principalement depuis l'extérieur de la conduite.

La portion la plus critique des risers se situe au niveau des soudures d'assemblage des éléments unitaires de conduite et, notamment, dans la portion la plus proche du point de contact et, la plus grande partie des efforts dans cette partie basse de la chaînette sont en fait engendrés par les mouvements propres du support flottant et par les excitations qui surviennent dans la partie haute de la chaînette soumise au courant et à la houle, l'ensemble de ces excitations se propageant alors mécaniquement tout le long de la conduite jusqu'au pied de chaînette.

Les aciers constituant les conduites sont sélectionnés pour résister à la fatigue pendant toute la durée de vie des installations, mais les soudures entre éléments de conduites, dans cette zone du pied de chaînette, constituent des points faibles lorsque ladite conduite véhicule soit de l'eau, soit des fluides comportant de l'eau et plus particulièrement de l'eau salée. En effet, lesdites soudures en présence d'eau sont sujettes à des phénomènes de fatigue et de corrosion créant dans le temps, sous contraintes variables de flexion, des fissures conduisant à la ruine de ladite conduite.

Pour pallier à ce problème, on réalise des soudures entre éléments de conduite à l'aide d'un acier inoxydable ou un alliage résistant à la corrosion. Les alliages anti corrosion sont bien connus de l'homme, de l'art, il s'agit principalement d'alliages base nickel, notamment du type inconel, de préférence de grade particulier, notamment en inconel 625 ou 825, lesdits inconels présentent aussi une excellente résistance à la fatigue de par leur haute limite élastique et permettant ainsi d'atteindre des durées de vie de 20 à 30 ans.

Pour que la soudure puisse être résistante et effectuée dans de bonnes conditions, on a proposé de revêtir l'intérieur des deux éléments conduites à souder ensemble du même acier inoxydable ou alliage résistant à la corrosion sur quelques cm au niveau des extrémités des éléments de conduite à souder ensemble, de manière à ce que la passe de pénétration de la soudure qui constituera la future paroi en contact avec le fluide soit du même métal que le métal d'apport de la soudure, en particulier de l'inconel. Ce revêtement en acier inoxydable ou alliage anti corrosion, notamment de type inconel, se fait par un procédé coûteux à l'arc électrique appelé « cladding », c'est-à-dire « revêtement », réalisé en général à l'aide d'une procédé TIG ou plasma, associé à un fil d'apport ou à une poudre d'acier inoxydable ou d'alliage résistant à la corrosion.

Le but de la présente invention est de fournir un nouveau procédé de fabrication et d'installation de conduites sous marines destinées à véhiculer des fluides corrosifs et notamment de l'eau comprenant l'assemblage par soudage de rames de conduites sous marines à partir d'un navire de pose en mer de conduites sous marines qui soit :

- fiable en termes de résistance à la fatigue au niveau de chacune des soudures, et notamment en permettant d'éviter l'apparition de fissures dans le temps,

- en affectant le moins possible les performances de résistances mécaniques et / ou augment le moins possible les pertes de charges du fluide véhiculé à l'intérieur de la conduite en opération, et

- simple et le moins coûteux possible à mettre en oeuvre, et notamment dans lequel on réalise le moins possible d'étape d'assemblage et notamment de soudage à bord du navire de pose.

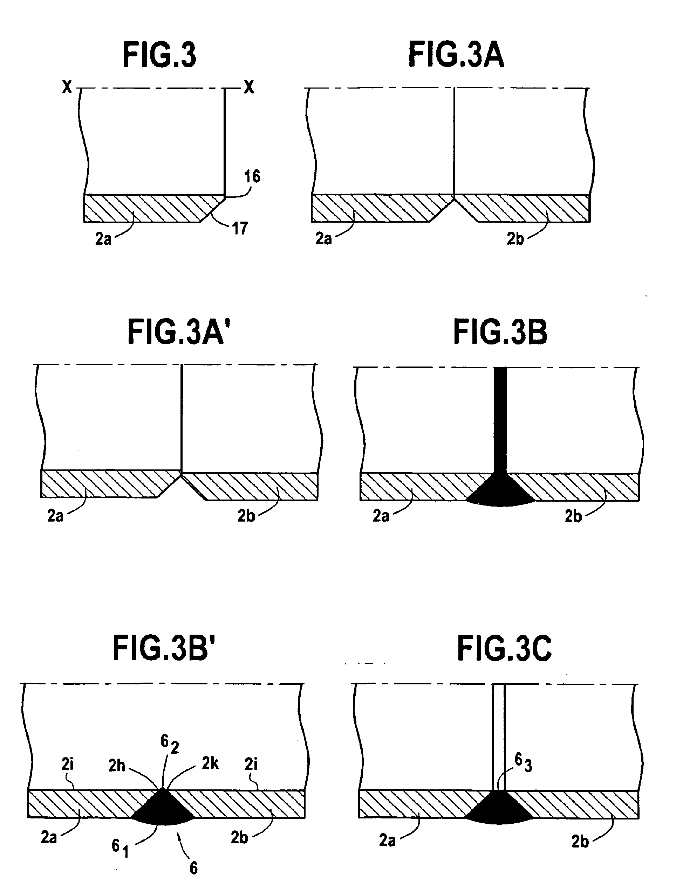

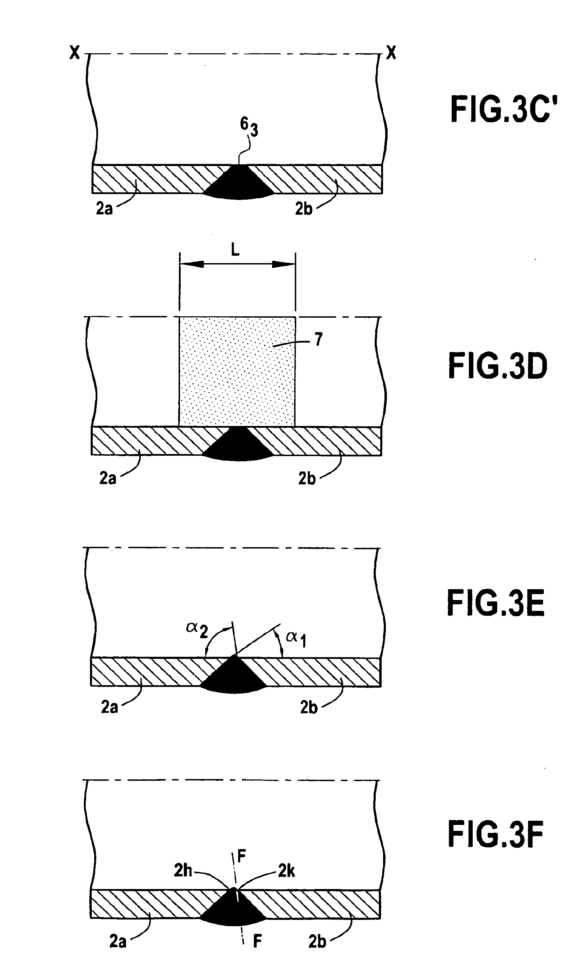

Selon la présente invention, les inventeurs ont découverts que des amorces de fissure se localisent à l'intérieur de la conduite, au niveau de la petite protubérance du cordon de soudure tournée vers l'intérieur de la conduite et non pas sur la face externe de la masse principale du cordon de soudure à l'extérieur de la conduite. Plus précisément, comme explicité dans la description détaillée qui va suivre en référence aux figures 3E et 3F, les inventeurs ont découverts que l'origine des ruines des soudures réside au niveau de la zone de transition entre la soudure et la surface interne en acier de base de la conduite adjacente, zone au niveau de laquelle, des contraintes de traction liées au choc thermique lors du soudage se traduisent par des défauts physique, notamment des amorces de fissuration localisées à ce niveau.

En effet, lors du soudage, il se produit des retraits ou trempes localisés incontrôlables, conduisant à des états de contrainte de contraction du métal localisé dans et à proximité de la zone de la soudure, alors que le reste de la surface adjacente de la conduite est soit au repos, soit en compression.

En général, on résout ces problèmes de contrainte de contraction localisés des soudures par des recuits pour relâcher la contrainte. On connaît d'autres moyens de traitement de ces problèmes au niveau des soudures pour obtenir une relaxation de contrainte de traction, mais ceux-ci ne sont pas compatibles avec les contraintes de temps et de cadence de pose en mer recherchées. Mais, dans le cas présent, pour le soudage d'éléments de conduite sous-marine lors de la pose en mer, ces traitements de recuit ne sont pas possibles.

La présente invention fournit un procédé de réalisation de conduites sous marines en acier destinées à véhiculer des fluides corrosifs et notamment de l'eau, comprenant l'assemblage par soudage des extrémités bout à bout d'éléments de conduite unitaires, les cordons de soudure en acier ou alliage métallique desdits soudage étant disposés à l'extérieur de la conduite, caractérisé en ce que on réalise un martelage localisé à l'intérieur de la conduite pour augmenter le niveau de contrainte de compression de l'acier ou du métal au niveau desdites soudures et sur la surface interne périphérique de la conduite adjacente, de part et d'autre des soudures, de manière à créer un corridor de surface martelée sur une distance L limitée dans la direction longitudinale axiale XX de ladite conduite, c'est-à-dire sur une partie seulement de la longueur de chacun des deux éléments de conduite assemblés par la dite soudure à partir de leurs extrémités respectives mises bout à bout.

Plus particulièrement, ledit corridor martelé s'étend sur une distance L au moins égale à la moitié de l'épaisseur de la paroi de conduite, de préférence encore une distance L inférieure 2 fois l'épaisseur de la conduite.

Plus particulièrement, la soudure comprend un cordon de soudure principal à l'extérieur de la conduite et une protubérance ou bourrelet interne d'épaisseur plus réduite dépassant du coté de l'intérieur de la conduite.

Cette protubérance ou bourrelet interne résulte de la fusion partielle des extrémités des éléments unitaires assemblés par soudage lors du traitement thermique de soudage.

Plus particulièrement, le dit corridor martelé s'étend sur une distance L correspondant à la largeur de la soudure à l'intérieur de la conduite, notamment la largeur du dit bourrelet interne, lequel bourrelet présente en pratique une largeur de 3 à 5mm, que l'on augmente de part et d'autre d'une largeur de 1 à 10 mm soit une distance L de 5 à 25mm.

On entend ici par "martelage", un traitement de surface par une multiplication d'impacts à l'aide d'un ou plusieurs projectiles qui réalise une augmentation du niveau de contrainte de compression sur une zone de la surface à traiter.

Selon la présente invention, c'est toute la surface dudit corridor, c'est-à-dire de la section de surface interne cylindrique, de part et d'autre de la soudure, et chevauchant celle-ci, qui subit ces impacts, aucune zone de la surface en dehors dudit corridor n'étant frappée par un tel impact.

Les projectiles peuvent être de forme de bille ou d'une extrémité de broche en pointe, les projectiles venant frapper par leur extrémité la surface à traiter et, lors des impacts, leur énergie cinétique est transformée en énergie de déformation plastique et élastique de la surface traitée ce qui a pour effet d'augmenter la contrainte de compression du matériau à ce niveau, supprimant de ce fait les zones à contraintes résiduelles de traction.

Des outils de martelage que l'on peut utiliser selon la présente invention sont décrits dans FR 2 791 293 de l'une des demanderesses, mais des outils de martelage plus rudimentaires décrits dans US 3 937 055, par exemple, peuvent être également utilisés.

Un martelage selon la présente invention consiste, en quelque sorte, à réaliser un forgeage à froid qui supprime les contraintes résiduelles de traction, en déformant la matière au niveau de la surface martelée. Il y a lieu d'observer que l'on ne cherche pas à résorber la surépaisseur éventuelle liée à un bourrelet ou protubérance interne du cordon de soudure, mais on cherche seulement à compresser, de manière sensiblement uniforme, la surface de la zone de soudage et les zones adjacentes, en utilisant une énergie suffisante pour plastifier et déformer le métal de manière à en supprimer toutes les contraintes résiduelles de traction dues à l'opération de soudage.

Plus particulièrement encore, lesdites extrémités d'éléments unitaires de conduite à souder comportent, en coupe axiale longitudinale, une extrémité droite du coté intérieur à la conduite formant talon sur, de préférence, au moins un quart de l'épaisseur de la partie courante de la conduite et prolongée vers l'extérieur de la conduite par un chanfrein incliné.

Dans ce cas, la protubérance ou bourrelet interne dépassant du cordon de soudure provient de la fusion dudit talon et du métal d'apport.

On comprend que ledit chanfrein est tourné vers l'extérieur de la conduite, de sorte qu'il peut recevoir un cordon de soudure déposé entre deux chanfreins aux extrémités de deux éléments de conduite mis bout à bout de chanfrein, formant sensiblement un V aux extrémités de deux éléments de conduite à assembler par soudage mis bout à bout.

Dans un mode de réalisation avantageux, on réalise un enlèvement de matière par usinage, de préférence par meulage ou fraisage, préalable de la surface interne de la conduite et du cordon de soudure au niveau de la surface à marteler, avant ledit martelage.

Avantageusement encore, on réalise ledit martelage au moins dans la zone de transition entre la surface interne du cordon de soudure et la surface interne adjacente de la conduite.

Plus particulièrement, on réalise ledit martelage de manière à réaliser la mise en compression ou augmenter la compression sur une épaisseur de 0,2 à 2 mm de ladite surface interne de la conduite et de ladite soudure.

Dans un mode de réalisation, la distance limitée L représente 1 à 3 fois l'épaisseur de la conduite.

Plus particulièrement encore, on réalise un martelage de manière à obtenir une contrainte de compression supérieure à 5 MPa, de préférence supérieure à 50 MPa, notamment de 50 à 1 000 MPa, sur toute la surface martelée.

Dans un mode préféré de réalisation, on réalise ledit martelage avec un dispositif de martelage que l'on déplace à l'intérieur de ladite conduite par translation et rotation au niveau des zones desdites soudures, le dispositif de martelage comprenant :

- au moins un outil de martelage monté sur un premier chariot motorisé,

- ledit premier chariot étant apte à se déplacer à l'intérieur de ladite conduite, en translation dans la direction longitudinale axiale XX de ladite conduite,

- ledit premier chariot supportant des moyens de déplacement dudit outil de martelage en translation radiale relative par rapport audit premier chariot, permettant d'appliquer ledit outil de martelage contre la surface interne de la conduite, ou de dégager l'outil de martelage en retrait par rapport à la surface interne de la conduite, et

- des moyens de déplacement en rotation dudit outil de martelage autour dudit axe longitudinal axial XX de la conduite, permettant d'effectuer ledit martelage sur toute la circonférence de la surface interne de ladite conduite par une dite rotation de l'outil de martelage.

Dans un mode de réalisation particulier, ledit outil de martelage comprend une surface vibrante, s'étendant de préférence sur une dite distance limitée L dans la direction longitudinale axiale XX, et une pluralité de projectiles de type à sphérule ou à pointe, aptes à être projetés en direction de la surface interne à traiter par ladite surface vibrante, pour créer une pluralité d'impacts.

Dans un mode préféré, le procédé selon l'invention est caractérisé en ce que ledit premier chariot comprend des moyens de déplacement dudit outil de martelage en translation relative par rapport audit premier chariot dans ladite direction axiale longitudinale XX.

En particulier dans le cas où l'outil de martelage comprend une pluralité de projectiles projetés à partir d'une surface vibrante radialement, elle-même s'étendant sur au moins une distance dans la direction longitudinale, ledit moyen de translation relative longitudinal de l'outil de martelage étant apte à déplacer lesdits projectiles d'au moins une distance correspondant à l'entraxe entre deux projectiles successifs, de façon à ce que toute la surface traitée soit entièrement martelée de manière sensiblement uniforme.

Plus particulièrement encore, le procédé selon l'invention est caractérisé en ce qu'il comprend les étapes dans lesquelles:

- on déplace en translation ledit premier chariot à l'intérieur de ladite conduite dans ladite direction longitudinale axiale XX, de sorte que ledit outil de martelage soit sensiblement positionné de manière à ce que celui-ci puisse réaliser un martelage dans ladite zone de soudure et de part et d'autre de celle-ci sur une dite distance à marteler L, dans ladite direction axiale longitudinale XX, chevauchant ladite soudure, puis

- on déplace ledit outil de martelage contre ou à proximité de la surface interne de la conduite par translation radiale dudit outil de martelage, puis

- on déplace en rotation ledit outil de martelage autour dudit axe longitudinal axial XX, sur la circonférence de la surface interne de conduite, puis

- le cas échéant, on déplace en translation relative l'outil de martelage dans la direction longitudinale axiale XX par rapport audit premier chariot, de façon à effectuer le martelage et la compression sur toute la surface martelée, notamment en cas

d'outil de martelage comportant une pluralité de dits projectiles de type à pointe ou sphérule, espacés les uns des autres.

On comprend que le déplacement en translation relative longitudinale de l'outil de martelage par rapport audit premier chariot peut se faire soit de manière continue, soit de manière séquentielle entre deux dites rotations dudit outil de martelage. Ceci permet de ne pas laisser de surface non martelée entre deux zones d'impact desdits projectiles successifs, et ainsi d'atteindre les zones les plus critiques, situées à l'interface entre le bourrelet du cordon de soudure et le métal de base de la conduite.

Selon d'autres caractéristiques avantageuses :

- ledit premier chariot motorisé supporte un premier arbre, disposé dans ladite direction longitudinale axiale XX, et

- ledit premier arbre supporte un support de guidage transversal, apte à guider le déplacement d'un deuxième chariot en translation radiale dans une direction transversale perpendiculaire à ladite direction longitudinale axiale XX, c'est-à-dire dans une direction transversale perpendiculaire à ladite direction longitudinale axiale XX, et comprenant un moyen apte à maintenir ledit outil de martelage en position en regard de la surface interne de ladite conduite, et

- ledit premier arbre comprend un moyen d'entraînement en rotation contrôlée lui-même autour de son dit axe longitudinal axial XX, de manière à pouvoir déplacer ledit outil de martelage sur toute la circonférence de la surface interne de la conduite, en rotation contrôlée sur lui-même, et

- ledit premier arbre est, de préférence, apte à être entraîné en translation relative par rapport audit premier chariot dans ladite direction longitudinale axiale XX, notamment sur au moins une

courte distance $\delta x$ correspondant à une partie de la distance éventuelle entre deux projectiles successifs, soit sur une distance comprise entre 0.1 et 10mm dans le cas d'outil de martelage à rangée unique de projectiles.

Dans un mode de réalisation particulier, ledit outil de martelage comprend une pluralité de projectiles, notamment du type à sphérile ou à pointe, projetés contre ladite surface à marteler à partir d'une surface vibrante dudit outil de martelage, notamment le cas échéant dans une direction radiale

Toutefois, dans un mode de réalisation particulier, ledit outil de martelage est monté à pivotement par rapport au dit deuxième chariot, permettant ainsi de faire varier l'inclinaison $\beta$ de la direction $Y_1$, $Y_1$ de projection desdits projectiles par rapport à ladite direction de translation radiale dudit deuxième chariot YY.

Ce mode de réalisation permet d'optimiser le martelage au niveau des zones de transition entre le bourrelet interne de soudure et la paroi de conduite adjacente, notamment en l'absence d'usinage préalable dudit bourrelet de soudure interne.

Dans le procédé dans lequel on réalise un meulage préalable, ce meulage préalable de la surface à marteler est réalisé avec un outil de meulage à meule rotative monté à la place ou avec un dit outil de martelage sur un dit premier chariot.

Plus particulièrement, on réalise lesdits soudages en acier au carbone, en acier inoxydable ou en alliage résistant à la corrosion, de type inconel, à haute élasticité, résistant à la fatigue, de préférence en inconel de grade 625 ou 825.

Plus particulièrement encore, le procédé selon l'invention comprend les étapes suivantes successives, dans lesquelles :

1) on réalise, en atelier à terre, l'assemblage par dit soudage des extrémités respectives d'au moins deux éléments unitaires de conduite, mis bout à bout pour former des rames de conduite, et

2) on réalise en mer, à partir d'un navire de pose équipé d'une tour de pose en J, l'assemblage par dit soudage des extrémités respectives desdites rames pour former une conduite.

La présente invention a également pour objet une conduite sous-marine de liaison fond-surface, dont au moins une partie comprend des zones de dites soudures d'assemblage d'éléments unitaires de conduites mises en compression par un procédé selon l'invention.

Plus particulièrement, la présente invention a pour objet une conduite sous-marine de liaison fond-surface selon l'invention, caractérisée en ce qu'il s'agit d'une conduite caténaire du type SCR dont au moins une partie comprenant la zone en contact avec le sol s'étendant sur au moins 100 m, de préférence 200 m au dessus du sol, a été assemblée par un procédé de réalisation de conduite selon l'invention.

La présente invention a enfin pour objet un dispositif de martelage comprenant au moins un dit outil de martelage monté sur un dit premier chariot apte à se déplacer en translation à l'intérieur d'une conduite, comprenant un dit outil de martelage apte à se déplacer en translation relative longitudinale XX par rapport audit premier chariot et en rotation autour dudit axe longitudinal axial XX de la conduite au niveau desdites soudures, tel que défini ci-dessus.

D'autres caractéristiques et avantages de la présente invention apparaîtront à la lumière détaillée des modes de réalisation qui vont suivre, en référence aux figures suivantes, dans lesquelles :

- la figure 1 est une vue de côté d'une conduite en configuration de chaînette simple 1, suspendue à un support flottant 10 de type FPSO, et dont l'extrémité inférieure repose sur le fond de la mer 13, représentée dans trois positions différentes 1a, 1b, 1c.

- la figure 1A est une coupe en vue de côté détaillant la tranchée 12 creusée par le pied 11 de chaînette lors des mouvements de soulèvement et de repos de la conduite sur le fond marin.

- la figure 2 est une coupe longitudinale d'une conduite et une vue de côté d'un robot de martelage 3 à l'intérieur de la conduite en cours d'assemblage, lors du traitement de martelage de la soudure 6 entre les extrémités de deux éléments de conduite 2a, 2b, la soudure n'étant représentée qu'en moitié inférieure de la coupe.

- la figure 2A est une vue en coupe de la conduite avec une vue de coté de l'intérieur de la conduite montrant un robot de martelage 3.

- la figure 3 représente une vue en coupe longitudinale d'une extrémité d'un élément de conduite montrant une partie droite (talon) et une partie inclinée (chanfrein).

- les figures 3A, 3B, 3C et 3D sont des coupes ou vues de côté de tout ou partie des extrémités respectives des deux éléments de conduite à assembler, respectivement dans les phases d'approche et de positionnement (3A), de soudage (3B), de meulage interne (3C), et de traitement par martelage (3D). Sur les figures 3C et 3D, on n'a représenté qu'une partie inférieure de la

soudure pour mieux montrer la surface meulée intérieure $6_3$ du cordon de soudure 6.

- la figure 3A' est une variante de la figure 3A en cas de léger décalage des talons des extrémités des deux éléments de conduite à assembler.

- les figures 3B' et 3C' sont des sections longitudinales partielles relatives aux figures 3B et 3C ne montrant que la partie inférieure de la soudure et de la conduite.

- les figures 3E et 3F représentent des variantes de la figure 3B' dans le cas où les extrémités de conduite sont décalées, comme dans la figure 3A', une amorce de fissure depuis l'intérieur étant montrée en 2k, figure 3F.

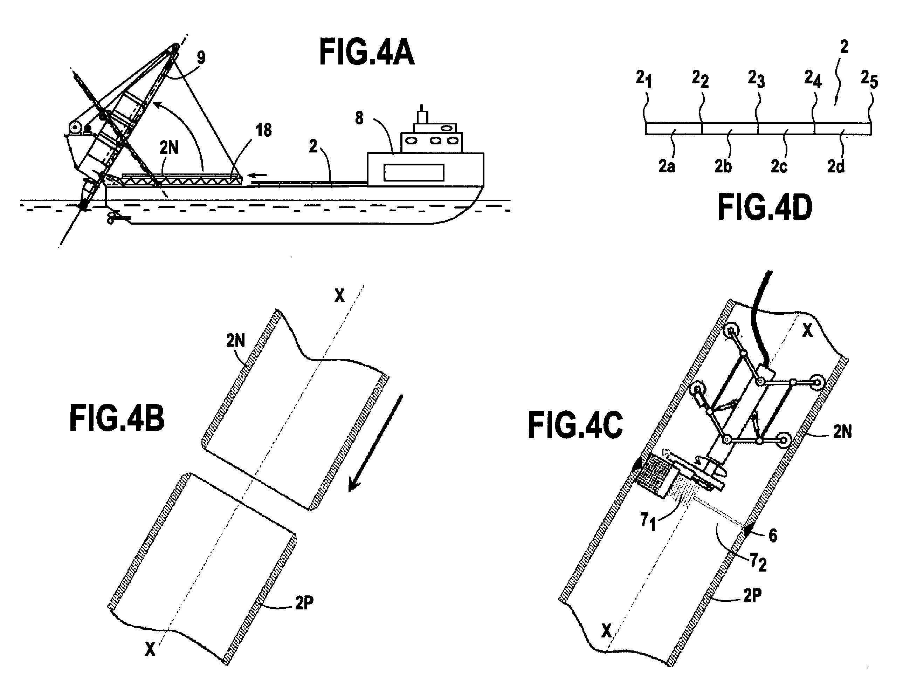

- la figure 4A représente un navire de pose de conduites équipé d'une tour de pose en J.

- la figure 4B représente en vue de côté une conduite 2P en cours de descente jusqu'au fond de la mer et maintenue en tension au sein de ladite tour de pose en J, et une rame 2N maintenue dans la partie supérieure de ladite tour de pose en J, ladite rame étant approchée de ladite conduite 2P en suspension, en vue d'être assemblée par soudage.

- la figure 4C représente en coupe en vue de côté les deux extrémités d'éléments de conduite. Dans la partie inférieure, le martelage n'a pas encore été effectué en $7_2$, alors que ledit martelage est en cours dans la demi partie supérieure en $7_1$.

- la figure 4D représente en vue de côté une rame 2 constituée de quatre éléments de conduite 2a-2d assemblés entre eux et prêts à être transférés sur le navire de pose en J de la figure 4A.

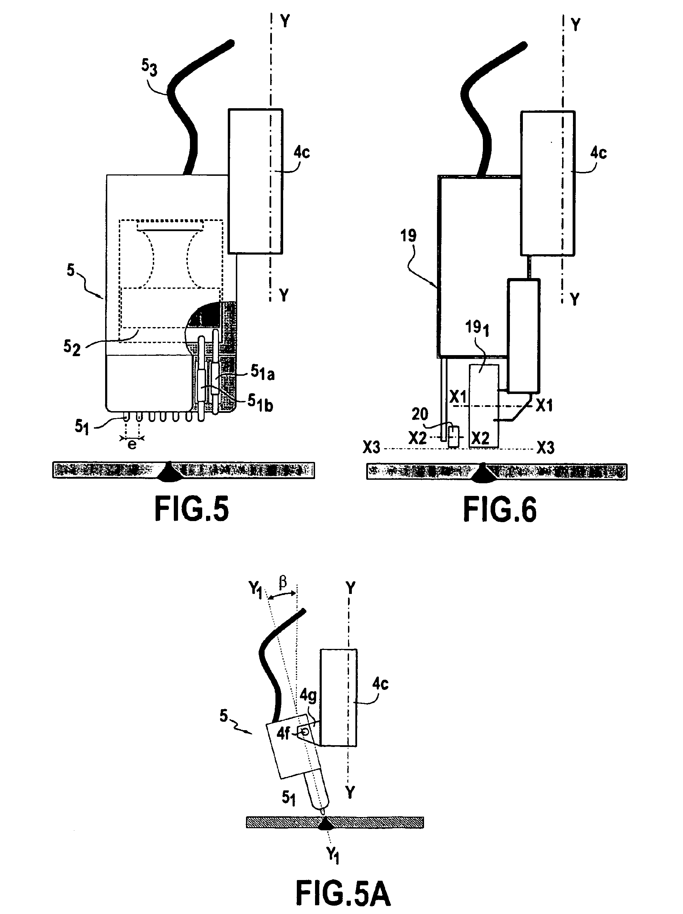

- la figure 5 représente une vue détaillée de l'outil de martelage 5.

- la figure 5A représente une vue de côté d'un outil de martelage orientable à simple rangée de projectile.

- la figure 6 représente une vue détaillée d'un outil de meulage 19 monté sur un dit second chariot 4c, à la place de l'outil de martelage 5.

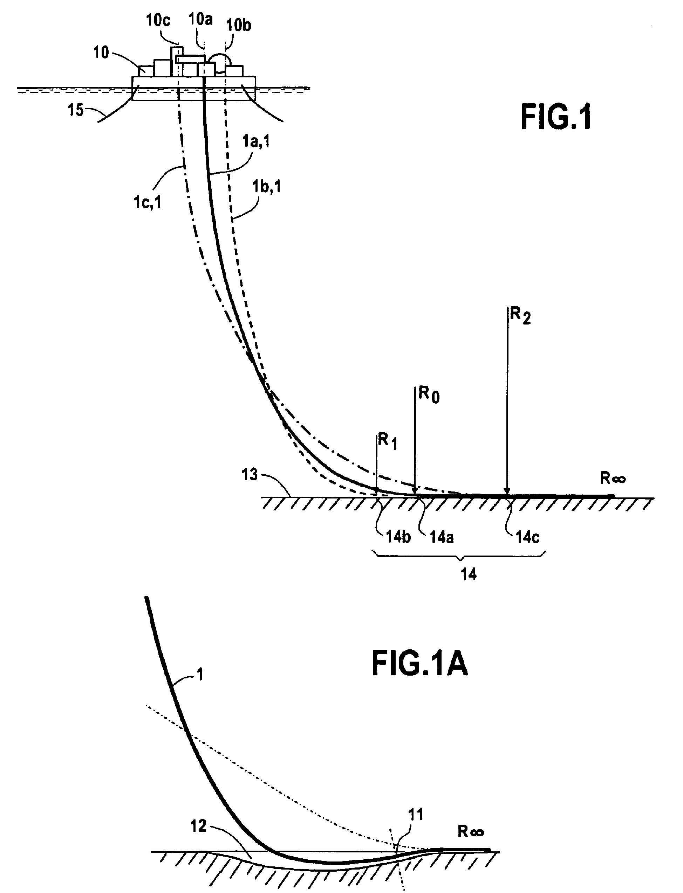

Dans la figure 1, on a représenté en vue de côté une liaison fond-surface 1, 1 a, 1b, 1 c, de type SCR, suspendue à un support flottant 10 de type FPSO ancré en 11, et reposant sur le fond de la mer 13 au niveau du point de contact 14a, 14b, 14c.

La courbure varie le long de la chaînette depuis la surface, ou son rayon a une valeur maximale, jusqu'au point de contact, ou son rayon a une valeur minimale $R_0$, $R_1$, $R_2$. Sous l'effet des vagues, du vent et du courant, le support flottant 10 se déplace, par exemple de gauche à droite comme représenté sur la figure, ce qui a pour effet de soulever ou de reposer la conduite en forme de chaînette, au niveau du fond de la mer. Dans la position 10c, le support flottant s'écarte de la position normale 10a, ce qui a pour effet de tendre la chaînette 1c en la soulevant, et de déplacer le point de contact 14 vers la droite de 14a en 14c; le rayon de courbure en pied de chaînette augmente de $R_0$ à $R_2$, de même que la tension horizontale dans la conduite engendrée au niveau dudit point de contact, et par conséquent que la tension dans la conduite au niveau dudit support flottant. De la même manière, dans la position 10b, le déplacement vers la droite du support flottant a pour effet de détendre la chaînette 1b et de reposer une partie de la conduite sur le fond de la mer. Le rayon $R_0$ au niveau du point de contact 14a décroît jusqu'à la valeur $R_1$, de même que la tension horizontale dans la conduite au même point, ainsi que la tension dans la conduite au niveau dudit support flottant. Cette réduction du rayon de courbure en 14b crée des contraintes internes considérables au sein de la structure de la conduite ce qui engendre des phénomènes de fatigue cumulés pouvant conduire à la ruine de la liaison fond-surface.

Ainsi, la conduite présente un rayon de courbure qui est maximal au sommet de la chaînette, c'est à dire au point de suspension sur le FPSO, et qui décroît jusqu'au point de contact 14 avec le sol 13. A cet endroit, le rayon de courbure est minimal dans la portion en suspension, mais dans la partie adjacente reposant sur le fond de la mer, ladite conduite étant théoriquement en ligne droite, son rayon de courbure est théoriquement infini. En fait ledit rayon n'est pas infini mais extrêmement élevé, car il persiste en général une courbure résiduelle.

Ainsi, comme expliqué précédemment, au gré des mouvements du support flottant en surface 10, le point de contact 14 se déplace de droite à gauche et, dans la zone soulevée ou reposée sur le fond, le rayon de courbure passe successivement d'une valeur minimale $R_{min}$ à une valeur extrêmement élevée, voire infinie dans le cas d'une configuration sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

De plus, comme illustré dans la figure 1A, on observe que durant ces mouvements alternatifs du point de contact, la raideur de la conduite, associée à la courbure résiduelle mentionnée précédemment, va dans le temps creuser un sillon 12 sur toute la longueur soulevée puis reposée, et créer ainsi une zone de transition dans laquelle existera un point d'inflexion 11, où la courbure change de sens dans les zones de transition, pour atteindre enfin une valeur infinie dans la portion de conduite sous-marine reposant en ligne droite sur le fond de la mer, ladite portion n'étant soulevée que de manière exceptionnelle, par exemple lors du cumul maximal dans la même direction, vers la gauche, de tous les éléments perturbateurs (houle-vent-courant) agissant sur le support flottant et sur la chaînette, ou encore lors de l'apparition de phénomènes de résonance au niveau de la chaînette elle-même. Lorsque la conduite se soulève, le point d'inflexion disparaît et les fibres précédemment en traction se retrouvent alors en compression ce qui crée une fatigue considérable dans cette portion de conduite. Ladite fatigue est alors d'un ou deux ordres supérieur à la fatigue en section courante où il n'y a pas de changement de la courbure, ce qui est incompatible avec une durée de vie recherchée de 25-30 ans voire plus.

Dans la figure 4D on a représenté une rame 2 comportant quatre éléments unitaires de conduite 2a-2d assemblés entre eux par soudages $2_2$, $2_3$ et $2_4$, réalisés en atelier. La première extrémité $2_1$ de ladite rame devant être soudée avec celle $2_5$ d'une conduite déjà assemblée en cours de pose, l'extrémité $2_5$ de la rame constituant la nouvelle extrémité $2_5$ de la conduite en cours de pose et étant prête à être assemblée à l'extrémité $2_1$ d'une rame suivante, à bord du navire de pose 8 de la figure 4A équipé d'une tour 9 de pose en J. A bord de ce navire, les rames sont stockées sur le pont à l'horizontale, puis elles sont relevées l'une après l'autre par une rampe pivotante 18 depuis une position horizontale jusqu'à être insérées dans la tour 9 de pose en J. La portion de conduite déjà posée 2P, non représentée figure 4A mais représentée figure 4B, est maintenue en tension au sein de la tour par une pince. Puis, une nouvelle rame 2N est descendue vers ladite conduite 2P maintenue en tension, comme détaillé sur la figure 4b, pour finalement être soudée, puis traitée par martelage selon l'invention, comme détaillé sur la figure 4c.

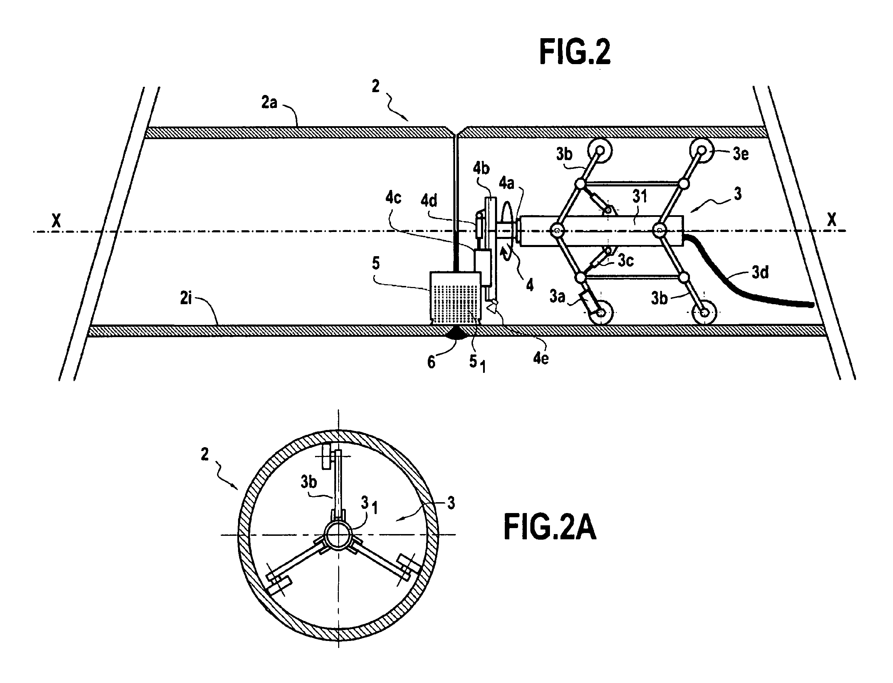

Sur la figure 2 on a représenté en coupe et en vue de côté deux éléments de conduites 2a-2b assemblés bout à bout par soudage 6 en atelier, la demi partie supérieure étant représentée en phase d'approche avant soudage. Lorsque le procédé de soudage est terminé et que le contrôle de la qualité dudit soudage a été effectué, depuis l'extrémité droite de la conduite de droite 2b, on introduit un dispositif commandé à distance ou robot 3 portant un outil de martelage 5 selon l'invention, de manière à venir positionner ledit outil de martelage à cheval sur ladite soudure 6, sensiblement à l'axe de cette dernière. Le robot 3 permet d'effectuer de manière automatique un traitement de martelage de la paroi interne et soudure sur un corridor 7 de largeur L, par exemple de largeur totale 2 à 6 cm, c'est-à-dire sensiblement de 1 à 3cm de part et d'autre du cordon de soudure 6.

Sur la figure 3, on a représenté en coupe, la face d'un élément de conduite usinée en vue de son assemblage par soudage à l'élément suivant. La face est usinée dans le plan perpendiculaire à l'axe XX de la conduite et présente, vers l'intérieur de la conduite, un talon 16 de quelques mm, en général 2 à 4 mm, puis un chanfrein 17, par exemple droit et conique tel que représenté, ou courbe et parabolique (non représenté).

Sur la figure 3A, on a mis face à face deux éléments de conduites prêts à être soudés. Lorsque les éléments de conduite présentent un niveau de qualité extrême, ou lorsqu'ils ont été réalésés de manière à présenter un diamètre circulaire parfait, les surfaces des parois intérieures desdits éléments de conduite sont sensiblement continues. Et lors du soudage (figure 3A, figure 3B-3B'), il en résulte une légère protubérance intérieure $6_2$ sensiblement uniforme sur la droite (2k) et la gauche (2h) ainsi que sur toute la périphérie, comme détaillé sur la figure 3B'.

Sur les figures 3E et 3F, on a mis en évidence les phénomènes redoutés précédemment décrits pour ce type de conduite soumise à la fatigue pendant une période pouvant excéder 25 à 30 ans. Lors du soudage effectué depuis l'extérieur par des robots de soudage orbitaux multi-têtes, la première passe doit être parfaitement fusionnée avec les talons respectifs 16 des deux extrémités des deux éléments de conduite 2a, 2b. A cet effet, les chanfreins 17 sont préparés comme représentés sur les figures 3 et 3A. C'est la fusion desdits talons qui crée une légère surépaisseur en forme de bourrelet ou protubérance de faible épaisseur $6_2$ (figure 3B) vers l'intérieur de la conduite, ladite surépaisseur étant sensiblement arrondie mais présentant une forme irrégulière sur la périphérie de la paroi intérieure de ladite conduite, et parfois un raccord anguleux au niveau du l'interface entre soudure et métal de base de la surface interne 2i des éléments de conduite.

En fait, en général, les éléments de conduite n'ont pas une section transversale interne parfaitement circulaire, mais celle-ci est légèrement ovalisée. De plus, l'épaisseur de la paroi peut varier sur la périphérie. Ainsi, lorsque l'on met face à face les extrémités des deux éléments de conduite à assembler, si par endroits de la périphérie, on retrouve l'alignement de la figure 3A, en certaines zones il existe un décalage tel que représenté sur la figure 3A'. Lors du processus de soudage, la protubérance $6_2$, sensiblement symétrique sur la figure 3B', présente alors un déséquilibre comme représenté sur la figure 3E. Ainsi, en 2h et 2k représentant respectivement la zone de transition entre la soudure elle-même et le métal de base des éléments de conduite 2a et 2b, il existe un angle $\alpha_1$, $\alpha_2$ entre la tangente à la protubérance et la surface interne 2i de la conduite, plus ou moins ouvert tel que représenté sur la figure 3E. En général, du côté en retrait vers l'intérieur, l'élément de conduite de gauche 2a, l'angle de raccordement $\alpha_1$ sera faible, alors que sur l'autre élément 2b, l'angle de raccordement $\alpha_2$ sera plus important et il pourra en résulter un angle vif.

C'est alors dans cette zone présentant des angles vifs $\alpha_2$, que risquent d'apparaître, sous l'effet de la fatigue, des amorces de fissuration, en général localisées, qui se propagent initialement dans la direction FF comme représenté sur la figure 3F, puis finalement sur toute la périphérie de la conduite, conduisant ainsi à la ruine de la soudure et donc de la liaison fond-surface.

Le processus de soudage met en jeu des puissances de chauffe et de fusion, donc des énergies considérables, car l'on cherche à minimiser le temps de cycle, surtout en ce qui concerne la soudure réalisée à bord du navire de pose 8, telle qu'explicitée précédemment en regard des figures 4A-4D. En effet, de tels navires d'installation ont un coût horaire d'exploitation extrêmement élevé, les opérations de soudage et de préparation constituant du temps d'occupation critique. On recherche des temps de cycle le processus de soudage de l'ordre de 10-12 minutes pour des conduites de 300 mm de diamètre et de 20 mm d'épaisseur. Les chocs thermiques localisés créés par la puissance des engins de soudage sont considérables et il en résulte des zones de concentration de contraintes résiduelles qui ne peuvent être traités de manière conventionnelle, notamment par recuit thermique, pour obtenir une relaxation des contraintes acceptables dans un laps de temps compatible avec les cadences de pose recherchées. Lesdites contraintes résiduelles peuvent être des contraintes de compression ou de traction, ces dernières étant les plus redoutées vis-à-vis de la tenue en fatigue pendant la durée de vie des installations qui excède 25-30 ans, voire plus.

Lors d'essais de fatigue réalisés sur des longueurs de conduites soumises à des simulations de fatigue correspondant à celles rencontrées lors de durée de vie de 25 à 50 ans, effectués sur un banc de fatigue, automatisé en termes de spectre de fréquence et d'amplitude des cycles alternés de contraintes, les inventeurs ont mis en évidence des phénomènes de fissuration localisée au niveau de l'interface entre le métal de base d'un élément de conduite et la zone de la soudure, principalement au niveau de la fusion des talons 16 et du bourrelet interne $6_2$ du cordon de soudure 6. En effet, en raison de phénomènes de trempe localisée, combinés à des irrégularités de fusion locale, il apparaît des points faibles dans lesquels la matière se trouve en état de contrainte résiduelle de traction à un niveau significatif, en général concomitamment à la présence d'un défaut physique localisé, tel un angle. A cet endroit précis vont alors apparaître rapidement lors des mouvements de la conduite, des amorces de fissuration en $2_k$ telles que représentés sur la figure 3F, ladite fissure se propageant alors rapidement de manière radiale et périphérique, en général selon une direction FF dans l'épaisseur de la paroi, conduisant ainsi rapidement à la ruine de la conduite et à des risques de pollution inacceptables.

Le dispositif selon l'invention est constitué d'un premier chariot 3 à roulettes 3e motorisé par un moteur 3a, alimenté par un ombilical 3d. Les roues sont reliées à un corps principal axial $3_1$ du premier chariot, par un système de bras 3b montés en parallélogramme articulé, de préférence trois structures 3b de parallélogramme, portant chacune deux roues alignées dans la direction XX. Les trois structures de parallélogramme 3b sont de préférence uniformément réparties à 120° les uns des autres, comme représenté en coupe transversale sur la figure 2A, et actionnés de manière synchrone par des ressorts ou des vérins 3c, de manière à ce que le corps principal $3_1$ dudit robot reste sensiblement dans l'axe XX de ladite conduite. Le premier chariot ou robot 3 porte à l'avant un arbre axial 4, mobile en translation selon l'axe XX dans un canon de guidage 4a solidaire du corps principal $3_1$ le traversant axialement, qui est déplacé en translation selon ledit axe XX par un actionneur, non représenté, qui peut être par exemple un vérin ou un moteur électrique, de préférence asservi et piloté par un ordinateur, à travers l'ombilical 3d. De plus, ledit arbre 4 est mobile en rotation sur lui-même autour du même axe XX, au sein dudit canon de guidage 4a. Ladite rotation de l'arbre 4 est actionnée par un moteur électrique non représenté, intégré au corps principal $3_1$, et de préférence asservi et piloté par ledit ordinateur. A l'avant de l'arbre 4, un support de guidage 4b, solidaire dudit arbre maintient un second chariot 4c et le guide dans une direction perpendiculaire à l'axe XX et à la paroi interne 2i de la conduite 2. Ledit second chariot 4c supporte un outil de martelage 5 solidaire de ce dernier. Ledit outil de martelage est maintenu en contact intime avec la paroi interne 2i de la conduite 2, de préférence avec une force d'appui constante, par exemple au moyen d'un vérin pneumatique 4d, déplaçant ledit second chariot 4c dans une direction transversale. Ainsi, après que la soudure ait été réalisée et contrôlée, on insère par l'extrémité droite de la conduite 2b, ledit robot 3 équipé du second chariot 4c portant l'outil de martelage 5 en position rétractée, de manière à ce que ledit outil de martelage n'interfère pas avec la surface interne de la paroi de conduite. Grâce à la motorisation 3a, on déplace le robot jusqu'à la soudure 6 à traiter, sous le contrôle d'une caméra vidéo 4e portée par le chariot 4c. Puis, on verrouille le chariot en position longitudinale en bloquant la motorisation 3a et en augmentant la pression dans les vérins 3c qui font pivoter les bras articulés 3b et bloquent les roues 3a contre la la surface interne 2i de la paroi des conduits. Le corps principal se trouve alors sensiblement à l'axe XX de la conduite, et l'on ajuste la position de l'outil de martelage 5 en agissant sur la position de l'arbre 4 mobile en translation selon XX, toujours sous le contrôle de la caméra vidéo 4e. On actionne alors le vérin 4d de manière à déployer l'outil de martelage dans une direction transversale pour le plaquer contre la surface 2i de la paroi de ladite conduite. On actionne alors l'outil de martelage, tout en actionnant en rotation l'arbre 4 autour de son axe XX, de manière à soumettre l'intégralité de la périphérie du cordon de soudure interne, ainsi que des surfaces adjacentes internes 2i de chacun des éléments de conduite pour former un corridor martelé 7, correspondant à la largeur active dudit outil de martelage. On améliore avantageusement le processus de martelage en effectuant des passes circulaires successives en décalant légèrement, en translation longitudinale, vers la gauche ou vers la droite, l'outil de martelage, en modifiant la position longitudinale de l'arbre 4, mobile en translation selon l'axe XX dans le canon de guidage 4a solidaire du bâti 3.

On utilise un outil de martelage 5 tel que décrit sur les figures 6 et 7 de FR 2 791 293. Plus particulièrement, la surface vibrante est constituée par l'extrémité d'une sonotrode. Cette sonotrode métallique est assujettie à un émetteur piézoélectrique par l'intermédiaire d'un ou plusieurs amplificateurs acoustiques présentant, d'une façon connue en soi, un profil adapté pour amplifier l'amplitude des oscillations du sonotrode. Les projectiles peuvent être de forme de bille ou d'une broche ou pointe. Les projectiles viennent frapper par leur extrémité la surface à traiter et, lors des impacts, leur énergie cinétique est transformée en énergie de déformation plastique et élastique qui créent ou augmentent le niveau de contrainte de compression du matériau à ce niveau.

Sur la figure 5, on a décrit plus précisément un chariot 4c équipé de son outil de martelage 5 commandé à distance à travers une liaison ombilicale $5_3$, comprenant une surface vibrante sous l'effet d'onde ultrason $5_2$ dans la direction transversale YY perpendiculaire à la direction longitudinale XX, et projetant les projectiles allongés $5_1$ d'une position rétractée $5_1$a à une position déployée $5_1$b, deux dits projectiles successives étant espacés d'une distance e de 2 à 5 mm.

Des décalages en translation de l'outil de martelage 5 dans la direction XX d'une distance $\delta x = e/5$ par exemple, permettent de marteler la surface à traiter entre les points d'impact des différents projectiles $5_1$ lorsque l'outil de martelage est dans une position longitudinale donnée et, ceci afin de marteler entièrement la surface à traiter, et aussi d'insister sur une zone plus particulière, et/ou d'uniformiser le martelage.

Sur la figure 5A, on a représenté un outil de martelage 5 à simple rangée de projectiles $5_1$ dans la direction XX. Ledit outil de martelage pivote autour de l'axe 4f du support 4g solidaire du chariot 4c. L'axe $X_1X_1$ des projectiles $5_1$, qui correspond également à la direction de projection desdits projectiles $5_1$ contre la surface à marteler, est incliné d'un angle β par rapport à ladite direction de translation radiale du chariot 4c (YY) de manière à atteindre, dans les meilleures conditions, les zones de transition 2h-2k telles que décrites ci-dessus en référence au figures 3B' et 3F, c'est-à-dire sensiblement le plus proche de la direction perpendiculaire à la surface du bourrelet dans lesdites zones. Ceci permet d'insister sur ces zones de transition 2h-2k sujettes à l'apparition des fissurations redoutées. Ainsi, on utilisera avantageusement un premier outil de martelage tel que décrit en regard de la figure 5 pour effectuer un martelage général. Puis, on insistera sur chacune des zones de transition 2h-2k au moyen dudit outil de martelage à simple rangée de projectiles, les deux outils de martelage étant avantageusement installés sur un même chariot 4c, ou sur des chariots indépendants solidaires du même arbre axial 4.

Ce martelage permet de déformer localement et sur une épaisseur contrôlée en fonction de l'énergie transmise par la sonotrode aux dites aiguilles, le métal de la soudure et le métal de base de l'extrémité de chacun des éléments de conduite. Cette déformation plastique du métal permet d'établir un état généralisé et sensiblement homogène de contrainte de compression dans toute la zone traitée 7, ce qui a pour effet de résorber les états localisés de contraintes résiduelles de traction résultant du processus de soudage et de phénomènes de trempe localisés indésirables précédemment décrits.

La mise en compression dépend de la puissance et de la précision du processus de martelage, et elle est effectuée en général sur une épaisseur variant de 0.2 à 2 mm, ce qui empêche avantageusement l'apparition des amorces de fissuration redoutées.

On améliore avantageusement la qualité de la conduite dans la zone de la soudure dès lors que l'on effectue avant le martelage, un meulage interne $6_3$ de la soudure, de manière à supprimer les défauts géométriques de surface, de manière à pouvoir réaliser le martelage sur une surface interne de conduite et soudure sensiblement cylindrique à ce niveau. Ledit meulage est avantageusement effectué à l'aide d'un outil de meulage 19 tel que représenté sur la figure 6, monté sur un dispositif similaire audit outil de martelage décrit ci-dessus, mais dans lequel l'outil de martelage a été remplacé par un outil de meulage 19. L'outil de meulage 19 comprend une meule rotative $19_1$ montée sur un dit second chariot 4c, et qui peut donc être déplacée en translation dans la direction transversale YY, de sorte que la meule rotative $19_1$ vienne en appui contre la surface interne de la conduite et de la soudure à meuler. Au moins une roulette 20 est montée solidaire de l'outil de meulage 19, à coté de celui-ci, de manière à ce qu'elle serve de guide pour assurer le maintien de la meule rotative $19_1$ lorsque celle-ci vient en appui sur ladite surface interne de conduite, c'est-à-dire de manière à ce que ladite meule rotative $19_1$ reste bien tangentielle à l'alésage de la conduite, enlevant de ce fait juste la quantité nécessaire de protubérance $6_2$ du cordon de soudure 6, comme représenté sur les figures 3C-3C'.

Sur la figure 6, on a représenté une meule rotative $19_1$ de forme cylindrique d'axe de rotation $X_1X_1$, s'étendant dans la direction longitudinale parallèle à la direction longitudinale axiale XX de la conduite, la surface abrasive de la meule correspondant à sa surface externe cylindrique. Dans un mode de réalisation, la meule rotative cylindrique peut s'étendre dans la direction $X_1X_1$ d'une dite distance L. De même, la roulette 20 présente un axe de rotation $X_2X_2$ dans la direction longitudinale parallèle aux axes XX et $X_1X_1$, de sorte que la roulette 20 et la meule rotative $19_1$ présentent une même tangente $X_3X_3$ la plus proche de la surface interne 2i de la conduite, ce qui permet que la roulette 20 puisse guider l'outil de meulage en maintenant son axe $X_1X_1$ tangentiellement à l'alésage 2i de la conduite, comme décrit ci-dessus.

Sur la figure 3D, on a représenté l'état de la surface intérieure de la conduite dans la zone de la surface interne martelée 7 de la soudure, sur une largeur L correspondant sensiblement à la largeur de la surface vibrante de l'outil de martelage 5.

Lors de la préfabrication à terre des rames 2 telles que représentées sur la figure 4D, la longueur des éléments unitaires 2a-2d sont de 6 à 12m environ, ce qui nécessite d'introduire le robot de martelage par l'extrémité la plus proche de la soudure à traiter, c'est-à-dire à une distance de 6 à 12 m environ selon les cas, puis de faire cheminer le robot sur cette distance pour venir le positionner avec précision à cheval sur ladite soudure à traiter.

Dans le cas de l'installation sur site, les rames préfabriquées ont en général une longueur de 50 m environ comme représenté sur la figure 4D, voire dans certains cas de 25m ou de 100m, et il est alors nécessaire de faire cheminer le robot sur cette distance, pour qu'il puisse atteindre la zone de la soudure à traiter.

Sur les figures 4A-4C, on a représenté l'assemblage entre deux rames ainsi que le traitement de la zone de soudure par martelage, lors de l'installation sur site qui est effectuée à bord d'un navire de pose 8 équipé d'une tour de pose en J 9, tel que représenté sur la figure 4A. A cet effet, l'élément de conduite déjà posé 2P est maintenu fixement en suspension en pied de tour, et un nouvel élément de conduite 2N est transféré à l'aide d'une rampe 18 pivotante, de manière connue, de la position horizontale à la position oblique correspondant à l'inclinaison de la tour pour être ensuite positionné dans l'axe de l'élément de conduite terminal en suspension. Ledit élément de conduite à assembler 2N est ensuite déplacé axialement selon la direction XX vers l'élément de conduite terminal 2P en suspension, comme représenté sur la figure 4B, puis soudé de manière connue. Depuis l'extrémité supérieure de la tour, on introduit à l'intérieur de la conduite le robot de martelage 3 que l'on laisse descendre jusqu'à la zone de la soudure, située 50 m en contrebas dans le cas de rames de 50 m, comme explicité sur la figure 4C, puis on effectue le martelage d'un corridor 7, de manière similaire au traitement effectué en atelier comme précédemment décrit en regard des figures 2-2A. En fin de traitement, on remonte le robot de martelage vers le sommet de la tour 9, puis l'on saisit l'extrémité supérieure de la conduite, que l'on redescend vers le bas de la tour pour effectuer un nouveau cycle d'assemblage et de traitement d'une nouvelle rame de conduite.

En atelier, comme à bord du navire d'installation, en fin de traitement de la zone la soudure par martelage, on effectue avantageusement un contrôle de l'état de contraintes de la zone traitée, de manière à mettre en évidence la suppression des états de contraintes de traction et leur substitution par des états de contrainte de compression. Le moyen ce contrôle le plus approprié est la méthode par rayons X qui permet de mesurer les distances inter atomiques au niveau de la surface de la matière, et ainsi de caractériser de manière très précise l'état et le niveau de contrainte, qu'il soit de traction, de repos, ou de compression. De tels moyens sont disponibles chez la demanderesse et sont mis en oeuvre au moyen d'un robot similaire à celui décrit précédemment, l'outil de martelage 5 étant remplacé par la source de rayons X et les capteurs associés disponibles auprès de la Société STRESSTECH (Finlande). Les signaux récupérés par les capteurs sont alors envoyés vers une unité de traitement du signal, par exemple un ordinateur, qui en déduira le niveau de contrainte réel existant après, et le cas échéant avant, le traitement par martelage de ladite zone de soudage.

La présente invention a été décrite principalement pour résoudre le problème lié aux liaisons fond-surface et plus particulièrement au niveau de la zone du point de contact avec le fond marin, d'une liaison de type SCR. Mais, l'invention s'applique à tout type de conduite sous-marine, qu'elle repose sur le fond de la mer, qu'elle soit intégrée à une tour verticale, ou encore qu'elle constitue une liaison en subsurface entre deux FPSO, ou entre un FPSO et une bouée de déchargement.

Les divers types de liaison subsurface sont décrits dans le brevet FR 05/04848 de l'une des demanderesses, plus particulièrement dans les figures 1A-1D et 2A. Lesdites liaisons subsurface sont tout particulièrement sujettes aux phénomènes de fatigue lorsqu'elles sont soumises à la houle et aux courants et surtout aux mouvements des supports flottants, FPSO et bouée de chargement, qui engendrent des contraintes alternées surtout dans la zone proche desdits supports flottants.

## Revendications

**1.** Procédé de réalisation de conduites sous marines (1) en acier comprenant l'assemblage par soudage des extrémités bout à bout d'éléments de conduite unitaires (2a-2b), les cordons de soudure en acier ou alliage métallique desdits soudage étant disposés à l'extérieur de la conduite, **caractérisé en ce que** on réalise un martelage localisé à l'intérieur de la conduite pour augmenter la compression de l'acier ou métal au niveau desdites soudures (6, $6_2$) et sur la surface interne (2i) périphérique de la conduite adjacente, de part et d'autre des soudures (6), de manière à créer un corridor (7) de surface martelée sur une distance L limitée dans la direction longitudinale axiale (XX) de ladite conduite, de préférence sur une distance L au moins égale à la largeur de la soudure, à l'intérieur de la conduite, augmentée de part et d'autre d'une largeur de 1 à 10 mm.

**2.** Procédé selon la revendication 1, **caractérisé en ce que** la soudure (6) comprend un cordon de soudure principale ($6_1$) à l'extérieur de la conduite et une protubérance ou bourrelet interne ($6_2$) d'épaisseur plus réduite dépassant du coté de l'intérieur de la conduite.

**3.** Procédé selon l'une des revendications 1 ou 2, **caractérisé en ce que** lesdites extrémités d'éléments unitaires de conduite à souder comportent, en coupe axiale longitudinale, une extrémité droite du coté intérieur à la conduite formant talon (16) sur, de préférence, au moins un quart de l'épaisseur de la partie courante de la conduite et prolongée vers l'extérieur de la conduite par un chanfrein (17) incliné.

**4.** Procédé selon l'une des revendications 1 à 3, **caractérisé en ce que** l'on réalise un enlèvement de matière par usinage, de préférence meulage ou fraisage préalable de la surface interne de la conduite et du cordon de soudure (6, $6_2$) au niveau de la surface à marteler, avant ledit martelage.

**5.** Procédé selon l'une des revendications 1 à 4, **caractérisé en ce que** l'on réalise ledit martelage au moins dans la zone de transition (2h, 2k) entre la surface interne ($6_2$, $6_3$) du cordon de soudure ($6_2$) et la surface interne (2i) adjacente de la conduite.

**6.** Procédé selon l'une des revendications 1 à 5, **caractérisé en ce que** l'on réalise ledit martelage de manière à réaliser la mise en compression ou augmenter la compression sur une épaisseur de 0,2 à 2 mm de ladite surface interne (2i) de la conduite et de ladite soudure (6).

**7.** Procédé selon l'une des revendications 1 à 6, **caractérisé en ce que** la distance limitée L représente 1 à 3 fois l'épaisseur de la conduite.

**8.** Procédé selon l'une des revendications 1 à 7, **caractérisé en ce que** l'on réalise un martelage de manière à obtenir une contrainte de compression supérieure à 5 MPa, de préférence supérieure à 50 MPa, sur toute la surface martelée.

**9.** Procédé selon l'une des revendications 1 à 8, **caractérisé en ce que** l'on réalise ledit martelage avec un dispositif de martelage que l'on déplace à l'intérieur de ladite conduite par translation et rotation au niveau des zones desdites soudures, le dispositif de martelage comprenant :

    - au moins un outil de martelage (5) monté sur un premier chariot motorisé (3),

- ledit premier chariot étant apte à se déplacer à l'intérieur de ladite conduite, en translation dans la direction longitudinale axiale (XX) de ladite conduite,

- ledit premier chariot supportant des moyens de déplacement dudit outil de martelage (5) en translation radiale (YY) relative par rapport audit premier chariot, permettant d'appliquer ledit outil de martelage (5) contre la surface interne de la conduite, ou de dégager l'outil de martelage (5) en retrait par rapport à la surface interne de la conduite, et

- des moyens de déplacement en rotation dudit outil de martelage (5) autour dudit axe longitudinal axial (XX) de la conduite, permettant d'effectuer ledit martelage sur toute la circonférence de la surface interne de ladite conduite par une dite rotation de l'outil de martelage (5).

**10.** Procédé selon la revendication 9, **caractérisé en ce que** ledit outil de martelage comprend une surface vibrante, s'étendant de préférence sur une dite distance limitée L dans la direction longitudinale axiale (XX), et une pluralité de projectiles ($5_1$) de type à sphérule ou à pointe, aptes à être projetés en direction de la surface interne à traiter par ladite surface vibrante, pour créer une pluralité d'impacts.

**11.** Procédé selon l'une des revendications 9 ou 10, **caractérisé en ce que** ledit premier chariot (3) comprend des moyens de déplacement dudit outil de martelage (5) en translation relative par rapport audit premier chariot dans ladite direction axiale longitudinale (XX).

**12.** Procédé selon l'une des revendications 9 à 11, **caractérisé en ce que** :

- on déplace en translation ledit premier chariot (3) à l'intérieur de ladite conduite dans ladite direction longitudinale axiale (XX), de sorte que ledit outil de martelage (5) soit sensiblement positionné de manière à ce que celui-ci puisse réaliser un martelage dans ladite zone de soudure et de part et d'autre de celle-ci sur une dite distance à marteler L, dans ladite direction axiale longitudinale (XX), chevauchant ladite soudure, puis

- on déplace ledit outil de martelage contre ou à proximité de la surface interne de la conduite par translation radiale (YY) dudit outil de martelage, puis

- on déplace en rotation ledit outil de martelage autour dudit axe longitudinal axial (XX), sur la circonférence de la surface interne de conduite, puis

- le cas échéant, on déplace en translation relative l'outil de martelage dans la direction longitudinale axiale (XX) par rapport audit premier chariot, de façon à effectuer le martelage et la compression sur toute la surface martelée, notamment en cas d'outil de martelage comportant une pluralité de dits projectiles ($5_1$) de type à pointe ou sphérule, espacés les uns des autres.

**13.** Procédé selon l'une des revendications 9 à 12, **caractérisé en ce que** :

- ledit premier chariot motorisé (3) supporte un premier arbre (4), disposé dans ladite direction longitudinale axiale (XX), et

- ledit premier arbre (4) supporte un support de guidage transversal (4b), apte à guider le déplacement d'un deuxième chariot (4c) en translation radiale dans une direction transversale perpendiculaire à ladite direction longitudinale axiale (XX), et comprenant un moyen (4d) apte à maintenir ledit outil de martelage (5) en position en regard de la surface interne (2i) de ladite conduite, et

- ledit premier arbre (4) comprend un moyen d'entraînement en rotation contrôlée lui-même autour de son dit axe longitudinal axial (XX), de manière à pouvoir déplacer ledit outil de martelage (5) sur toute la circonférence de la surface interne (2i) de la conduite, en rotation contrôlée sur lui-même, et

- ledit premier arbre (4) est, de préférence, apte à être entraîné en translation relative par rapport audit premier chariot (3) dans ladite direction longitudinale axiale (XX), sur au moins une dite distance limitée L.

**14.** Procédé selon l'une des revendications 9 à 13, **caractérisé en ce que** ledit outil de martelage (5) comprend une pluralité de projectiles ($5_1$) projetés contre ladite surface à marteler à partir d'une surface vibrante ($5_2$) dudit outil de martelage.

**15.** Procédé selon la revendication 14, **caractérisé en ce que** ledit outil de martelage est monté à pivotement par rapport au dit deuxième chariot (4c), permettant ainsi de faire varier l'inclinaison ($\beta$) de la direction ($Y_1$, $Y_1$) de projection desdits projectiles par rapport à ladite direction de translation radiale dudit deuxième chariot (YY).

**16.** Procédé selon l'une des revendications 9 à 15, **caractérisé en ce que** l'on réalise un meulage préalable de la surface à marteler avec un outil de meulage (19) à meule rotative ($19_1$) monté à la place ou avec un dit outil de martelage (5), sur un dit premier chariot (3).

**17.** Procédé selon l'une des revendications 1 à 16, **caractérisé en ce que** l'on réalise lesdits soudages (6) en acier au carbone, en acier inoxydable ou en alliage résistant à la corrosion, de type inconel, à haute élasticité, résistant à la fatigue, de préférence en inconel de grade 625 ou 825.

18. Procédé selon l'une des revendications 1 à 17, **caractérisé en ce qu'**il comprend les étapes suivantes successives, dans lesquelles :

1) on réalise, en atelier à terre, l'assemblage par dit soudage ($2_2$, $2_3$, $2_4$) des extrémités respectives d'au moins deux éléments unitaires de conduite (2a-2b), mis bout à bout pour former des rames (2) de conduite, et

2) on réalise en mer, à partir d'un navire de pose (8) équipé d'une tour de pose en J (9), l'assemblage par dit soudage des extrémités ($2_1$, $2_5$) respectives desdites rames pour former une conduite.

19. Conduite sous-marine de liaison fond-surface, dont au moins une partie comprend des zones (7) de dites soudures d'assemblage d'éléments unitaires de conduites mises en compression uniforme selon le procédé de l'une des revendications 1 à 18.

20. Conduite sous-marine de liaison fond-surface selon la revendication 19, **caractérisée en ce qu'**il s'agit d'une conduite caténaire du type SCR dont au moins une partie comprenant la zone en contact avec le sol s'étendant sur au moins 100 m, de préférence 200 m au dessus du sol, a été assemblée par un procédé selon l'une des revendications 1 à 18.

21. Dispositif de martelage utile dans un procédé selon l'une des revendications 9 à 16, comprenant au moins un dit outil de martelage (5) monté sur un dit premier chariot (3) apte à se déplacer en translation à l'intérieur d'une conduite, comprenant un dit outil de martelage apte à se déplacer en translation relative longitudinale (XX) par rapport audit premier chariot et en rotation autour dudit axe longitudinal axial (XX) de la conduite au niveau desdites soudures (6), tel que défini dans l'une des revendications 9 à 15.


**Claims**

1. A method of making steel undersea pipes (1), the method comprising end-to-end assembly by welding of unit pipe elements (2a-2b), the steel or metal alloy weld beads of said welds being located on the outside of the pipe, the method being **characterized in that** localized peening is performed inside the pipe to increase the compression of the steel or metal in said welds (6, $6_2$) and over the adjacent peripheral inside surface (2i) of the pipe on either side of the weld (6) so as to create a surface swath (7) that is peened over a limited distance L in the axial longitudinal direction XX of said pipe, preferably over a distance L that is not less than the width of the weld, on the inside of the pipe, plus a width of 1 mm to 10 mm on either side thereof.

2. A method according to claim 1, **characterized in that** the weld (6) comprises a main weld bead ($6_1$) at the outside of the pipe and an inside projection or seam ($6_2$) of smaller thickness standing proud of the inside of the pipe.

3. A method according to claim 1 or claim 2, **characterized in that** said ends of unit pipe elements for welding together present, in longitudinal axial section, a straight end on the inside of the pipe forming a root face (16) preferably occupying at least one-fourth of the thickness of the main portion of the pipe, and extended towards the outside of the pipe by a sloping chamfer (17).

4. A method according to any one of claims 1 to 3, **characterized in that** material is removed by machining, preferably by grinding or by milling, from the inside surface of the pipe and from the weld bead (6, $6_2$) over the surface that is to be peened, prior to said peening.

5. A method according to any one of claims 1 to 4, **characterized in that** said peening is performed at least in the transition region (2h, 2k) between the inside surface ($6_2$, $6_3$) of the weld bead ($6_2$) and the adjacent inside surface (2i) of the pipe.

6. A method according to any one of claims 1 to 5, **characterized in that** said peening is performed in such a manner as to establish compression or to increase compression over a thickness of 0.2 mm to 2 mm of said inside surface (2i) of the pipe and of said weld (6).

7. A method according to any one of claims 1 to 6, **characterized in that** the limited distance L represents one to three times the thickness of the pipe.

8. A method according to any one of claims 1 to 7, **characterized in that** peening is performed in such a manner as to obtain compression stress that is greater than 5 MPa, preferably greater than 50 MPa, over the entire peened surface.

9. A method according to any one of claims 1 to 8, **characterized in that** said peening is performed with a peening device that is moved inside said pipe in translation and in rotation in the vicinity of said weld, the peening device comprising:

- at least one peening tool (5) mounted on a first motor-driven carriage (3);

- said first carriage being suitable for moving inside said pipe in translation in the axial longitudinal direction XX of said pipe;

- said first carriage supporting means for moving said peening tool (5) in radial translation YY relative to said first carriage, enabling said peening tool (5) to be applied against the inside surface of the pipe, or enabling the peening tool (5) to be set back away from said inside surface of the pipe; and

- means for moving said peening tool (5) in rotation about said axial longitudinal axis XX of the pipe, enabling said peening to be performed over the entire circumference of the inside surface of said pipe one said rotation of the peening tool (5).

10. A method according to claim 9, **characterized in that** said peening tool comprises a vibratory surface that preferably extends over said limited distance L in the axial longitudinal direction XX, and a plurality of projectiles ($5_1$) of rounded or pointed type suitable for being projected towards the inside surface for treatment by said vibrating surface in order to create a plurality of impacts.

11. A method according to claim 9 or claim 10, **characterized in that** said first carriage (3) includes means for moving said peening tool (5) in translation relative to said first carriage in said longitudinal axial direction XX.

12. A method according to any one of claims 9 to 11, **characterized in that**:

- said first carriage (3) is moved in translation inside said pipe in said axial direction XX, such that said peening tool (5) is substantially positioned so that it can perform peening in said weld region and on either side thereof over a said distance L for peening, in said longitudinal axial direction XX and astride said weld; then

- said peening tool is moved against or close to the inside surface of the pipe by moving said peening tool in radial translation YY; then

- said peening tool is then moved in rotation about said axial longitudinal axis XX over the circumference of the inside surface of the pipe; and then

- where appropriate, the peening tool is moved in translation in the axial longitudinal direction XX relative to said first carriage so as to perform the peening and compression over the entire peened surface, in particular for a peening tool including a plurality of said projectiles ($5_1$) of pointed or rounded type that are spaced about from one another.

13. A method according to any one of claims 9 to 12, **characterized in that**:

- said first motor-driven carriage (3) supports a first shaft (4) placed in said axial longitudinal direction XX; and

- said first shaft (4) supports a transverse guide support (4b) suitable for guiding the movement of a second carriage (4c) in radial translation in a transverse direction perpendicular to said axial longitudinal direction XX, and comprising means (4d) suitable for keeping said peening tool (5) in position facing the inside surface (2i) of said pipe; and

- said first shaft (4) comprises means for driving it in controlled rotation about its said axial longitudinal axis XX, so as to enable said peening tool (5) to be moved over the circumference of the inside surface (2i) of the pipe in controlled rotation about its axis; and

- said first shaft (4) is preferably suitable for being driven in translation relative to said first carriage (3) in said axial longitudinal direction XX, over at least a said limited distance L.

14. A method according to any one of claims 9 to 13, **characterized in that** said peening tool (5) comprises a plurality of projectiles ($5_1$) that are projected against said surface for peening from a vibrating surface ($5_2$) of said peening tool.

15. A method according to claim 14, **characterized in that** said peening tool is mounted to pivot relative to said second carriage (4c) thus enabling the angle of inclination β of the projection direction $Y_1Y_1$ of said projectiles to be varied relative to said direction YY of movement in radial translation of said second carriage.

16. A method according to any one of claims 9 to 15, **characterized in that** prior grinding is performed of the surface for peening with a grinder tool (19) having a rotary grindwheel ($19_1$) mounted in the place of or together with a said peening tool (5) on a said first carriage (3).

17. A method according to any one of claims 1 to 16, **characterized in that** said welding (6) is performed using carbon steel, stainless steel, or a corrosion-resisting alloy of the Inconel type having high elasticity, and good fatigue resistance, and preferably Inconel of grade 625 or 825.

18. A method according to any one of claims 1 to 17, **characterized in that** it comprises the following successive steps:

1) in a workshop on land, assembling the respective ends of at least two unit pipe elements (2a-2b) together end-to-end by said welding ($2_2$, $2_3$, $2_4$) in order to form pipe strings (2); and

2) at sea, on board a laying ship (8) fitted with a J-lay tower (9), assembling respective ends ($2_1$, $2_5$) of said strings together by said welding to form a pipe.

19. An undersea bottom-surface connection pipe including at least a portion having regions (7) of said welds assembling together unit pipe elements, the welds being put into uniform compression by the method according to any one of claims 1 to 18.

20. An undersea bottom-surface connection pipe according to claim 19, **characterized in that** it acts as an SCR catenary pipe having at least a portion that includes a region in contact with the bottom that extends above the bottom over at least 100 m, and preferably 200 m, said portion being assembled using a method according to any one of claims 1 to 18.

21. A peening device suitable for use in a method according to any one of claims 9 to 16, the device including at least one said peening tool (5) mounted on a said first carriage (3) suitable for moving in translation inside a pipe, the device comprising a said peening tool suitable for moving in longitudinal translation XX relative to said first carriage and in rotation about said axial longitudinal axis XX of the pipe in the vicinity of said welds (6), as defined in any one of claims 9 to 15.

**Patentansprüche**

1. Verfahren zur Herstellung von Unterwasserleitungen (1) aus Stahl, umfassend das Verbinden der stumpf gestoßenen Enden von einzelnen Leitungselementen (2a-2b) durch Schweißen, wobei die Stahl- oder Metallegierungsschweißnähte der Schweißungen außerhalb der Leitung angeordnet sind, **dadurch gekennzeichnet, daß** innerhalb der Leitung ein örtlich begrenztes Hämmern durchgeführt wird, um die Verdichtung des Stahls oder Metalls im Bereich der Schweißnähte (6, $6_2$) und auf der umfangseitigen Innenfläche (2i) der benachbarten Leitung, auf beiden Seiten der Schweißnähte (6) zu erhöhen, so daß ein Korridor (7) aus einer gehämmerten Fläche über eine begrenzte Weite L in axialer Längsrichtung (XX) der Leitung, innerhalb der Leitung, vorzugsweise über eine Weite L, die wenigstens gleich der Breite der Schweißnaht ist, beiderseits erhöht um eine Breite von 1 bis 10 mm, erzeugt wird.

2. Verfahren nach Anspruch 1, **dadurch gekennzeichnet, daß** die Schweißnaht (6) eine Haupt-

schweißnaht ($6_1$) außerhalb der Leitung und einen Innenüberhang oder - wulst ($6_2$) von geringerer Dikke, der auf der Seite des Innenraums der Leitung vorragt, umfaßt.

3. Verfahren nach einem der Ansprüche 1 oder 2, **dadurch gekennzeichnet, daß** die Enden von zu verschweißenden einzelnen Leitungselementen im axialen Längsschnitt, auf der Seite innerhalb der Leitung ein gerades Ende aufweisen, das vorzugsweise über wenigstens ein Viertel der Dicke des durchgehenden Teils der Leitung einen Absatz (16) bildet und zur Außenseite der Leitung durch eine schräge Fase (17) fortgesetzt ist.

4. Verfahren nach einem der Ansprüche 1 bis 3, **dadurch gekennzeichnet, daß** vor dem Hämmern eine spanabhebende Bearbeitung, vorzugsweise ein Vorschleifen oder -fräsen der Innenfläche der Leitung und der Schweißnaht (6, $6_2$) im Bereich der zu hämmernden Fläche durchgeführt wird.

5. Verfahren nach einem der Ansprüche 1 bis 4, **dadurch gekennzeichnet, daß** das Hämmern wenigstens im Übergangsbereich (2h, 2k) zwischen der Innenfläche ($6_2$, $6_3$) der Schweißnaht ($6_2$) und der benachbarten Innenfläche (2i) der Leitung durchgeführt wird.

6. Verfahren nach einem der Ansprüche 1 bis 5, **dadurch gekennzeichnet, daß** das Hämmern derart durchgeführt wird, daß, über eine Dicke von 0,2 bis 2 mm der Innenfläche (2i) der Leitung und der Schweißnaht (6), das Verdichten vollzogen oder die Verdichtung erhöht wird.

7. Verfahren nach einem der Ansprüche 1 bis 6, **dadurch gekennzeichnet, daß** die begrenzte Weite L die ein- bis dreifache Dicke der Leitung ausmacht.

8. Verfahren nach einem der Ansprüche 1 bis 7, **dadurch gekennzeichnet, daß** ein Hämmern derart durchgeführt wird, daß eine Druckspannung von mehr als 5 MPa, vorzugsweise von mehr als 50 MPa, über die gesamte gehämmerte Fläche erzielt wird.

9. Verfahren nach einem der Ansprüche 1 bis 8, **dadurch gekennzeichnet, daß** das Hämmern mit einer Hämmervorrichtung durchgeführt wird, die innerhalb der Leitung in Höhe der Bereiche der Schweißnähte verschieblich und drehend bewegt wird, wobei die Hämmervorrichtung umfaßt:

- wenigstens ein Hämmerwerkzeug (5), das an einem ersten motorisierten Schlitten (3) angebracht ist,
- wobei der erste Schlitten geeignet ist, sich innerhalb der Leitung in axialer Längsrichtung (XX) der Leitung verschieblich zu bewegen,
- wobei der erste Schlitten Mittel zum radialen Verschiebebewegen (YY) des Hämmerwerkzeugs (5) relativ zum ersten Schlitten trägt, die ermöglichen, das Hämmerwerkzeug (5) an die Innenfläche der Leitung anzulegen oder das Hämmerwerkzeug (5) gegenüber der Innenfläche der Leitung zurückzufahren, sowie
- Mittel zum Drehbewegen des Hämmerwerkzeugs (5) um die axiale Längsachse (XX) der Leitung, die ermöglichen, das Hämmern über den gesamten Umfang der Innenfläche der Leitung durch ein Drehen des Hämmerwerkzeugs (5) zu vollziehen.

10. Verfahren nach Anspruch 9, **dadurch gekennzeichnet, daß** das Hämmerwerkzeug eine Vibrationsfläche, die sich vorzugsweise über eine genannte begrenzte Weite L in axialer Längsrichtung (XX) erstreckt, sowie eine Vielzahl von Projektilen ($5_1$) vom Typ mit Kügelchen oder mit Spitze umfaßt, die geeignet sind, durch die Vibrationsfläche in Richtung der zu behandelnden Innenfläche geschleudert zu werden, um eine Vielzahl von Einschlägen zu erzeugen.

11. Verfahren nach einem der Ansprüche 9 oder 10, **dadurch gekennzeichnet, daß** der erste Schlitten (3) Mittel zum relativen Verschiebebewegen des Hämmerwerkzeugs (5) gegenüber dem ersten Schlitten in axialer Längsrichtung (XX) umfaßt.

12. Verfahren nach einem der Ansprüche 9 bis 11, **dadurch gekennzeichnet, daß**:

    - der erste Schlitten (3) innerhalb der Leitung in axialer Längsrichtung (XX) derart verschieblich bewegt wird, daß das Hämmerwerkzeug (5) im wesentlichen so positioniert ist, daß es ein Hämmern im Schweißnahtbereich und beiderseits hiervon über eine zu hämmernde Weite L in axialer Längsrichtung (XX), die Schweißnaht übergreifend durchführen kann, anschließend
    - das Hämmerwerkzeug an oder in der Nähe der Innenfläche der Leitung durch Radialverschiebung (YY) des Hämmerwerkzeugs bewegt wird, dann
    - das Hämmerwerkzeug um die axiale Längsachse (XX) über den Umfang der Leitungsinnenfläche drehbewegt wird, anschließend
    - gegebenenfalls das Hämmerwerkzeug in axialer Längsrichtung (XX) gegenüber dem ersten Schlitten relativ verschieblich bewegt wird, um das Hämmern und das Verdichten über die gesamte gehämmerte Fläche zu vollziehen, insbesondere im Fall eines Hämmerwerkzeugs, das eine Vielzahl von voneinander beabstandeten Projektilen ($5_1$) vom Typ mit Spitze oder Kügelchen umfaßt.

13. Verfahren nach einem der Ansprüche 9 bis 12, **dadurch gekennzeichnet, daß**:

    - der erste motorisierte Schlitten (3) eine in axialer Längsrichtung (XX) angeordnete erste Welle (4) trägt, und
    - die erste Welle (4) einen querverlaufenden Führungsträger (4b) trägt, der geeignet ist, die radiale Verschiebebewegung eines zweiten Schlittens (4c) in einer zu der axialen Längsrichtung (XX) senkrechten Querrichtung zu führen, und der ein Mittel (4d) aufweist, das geeignet ist, das Hämmerwerkzeug (5) gegenüber der Innenfläche (2i) der Leitung in Position zu halten, und
    - die erste Welle (4) ein Mittel zum eigenen kontrollierten Drehantrieb um ihre axiale Längsachse (XX) umfaßt, um das Hämmerwerkzeug (5) über den gesamten Umfang der Innenfläche (2i) der Leitung, um sich selbst kontrolliert drehend bewegen zu können, und
    - die erste Welle (4) vorzugsweise geeignet ist, gegenüber dem ersten Schlitten (3) in axialer Längsrichtung (XX) über wenigstens eine begrenzte Weite L relativ verschieblich bewegt zu werden.

14. Verfahren nach einem der Ansprüche 9 bis 13, **dadurch gekennzeichnet, daß** das Hämmerwerkzeug (5) eine Vielzahl von Projektilen ($5_1$) umfaßt, die von einer Vibrationsfläche ($5_2$) des Hämmerwerkzeugs aus gegen die zu hämmernde Fläche geschleudert werden.

15. Verfahren nach Anspruch 14, **dadurch gekennzeichnet, daß** das Hämmerwerkzeug gegenüber dem zweiten Schlitten (4c) verschwenkbar angebracht ist, wodurch ermöglicht wird, die Neigung (β) der Schleuderrichtung ($Y_1$, $Y_1$) der Projektile gegenüber der radialen Verschieberichtung des zweiten Schlittens (YY) zu verändern.

16. Verfahren nach einem der Ansprüche 9 bis 15, **dadurch gekennzeichnet, daß** ein Vorschleifen der zu hämmernden Fläche mit einem Schleifwerkzeug (19) mit rotierender Schleifscheibe ($19_1$) durchgeführt wird, das an der Stelle eines oder mit einem Hämmerwerkzeug(s) (5) an einem ersten Schlitten (3) angebracht ist.

17. Verfahren nach einem der Ansprüche 1 bis 16, **dadurch gekennzeichnet, daß** die Schweißnähte (6) aus Kohlenstoffstahl, aus rostfreiem Stahl oder aus korrosionsbeständiger, hochelastischer, dauerfester Legierung, vom Typ Inconel, vorzugsweise aus Inconel 625 oder 825 ausgebildet werden.

**18.** Verfahren nach einem der Ansprüche 1 bis 17, **dadurch gekennzeichnet, daß** es die folgenden aufeinanderfolgenden Schritte umfaßt, bei denen:

1) in einer Werkstätte an Land das Verbinden der jeweiligen Enden von wenigstens zwei einzelnen, stumpf gestoßenen Leitungselementen (2a-2b) durch Schweißen ($2_2$, $2_3$, $2_4$) vollzogen wird, um Leitungsstränge (2) zu bilden, und

2) im Meer, von einem Verlegungsschiff (8) aus, welches mit einem J-förmigen Verlegungsturm (9) ausgestattet ist, das Verbinden der jeweiligen Enden ($2_1$, $2_5$) der Stränge durch Schweißen vollzogen wird, um eine Leitung zu bilden.

**19.** Unterwasserleitung zur Verbindung zwischen Grund und Oberfläche, von welcher wenigstens ein Teil Bereiche (7) von genannten Schweißnähten zum Verbinden von einzelnen Leitungselementen umfaßt, welche nach dem Verfahren von einem der Ansprüche 1 bis 18 gleichmäßig verdichtet sind.

**20.** Unterwasserleitung zur Verbindung zwischen Grund und Oberfläche, nach Anspruch 19, **dadurch gekennzeichnet, daß** es sich um eine aufgehängte Steigleitung vom Typ SCR handelt, von der wenigstens ein Teil, welcher den mit dem Grund in Kontakt befindlichen Bereich umfaßt, der sich über wenigstens 100 m, vorzugsweise 200 m oberhalb des Grundes erstreckt, mittels eines Verfahrens nach einem der Ansprüche 1 bis 18 verbunden worden ist.

**21.** Hämmervorrichtung, die bei einem Verfahren nach einem der Ansprüche 9 bis 16 von Nutzen ist, mit wenigstens einem Hämmerwerkzeug (5), das an einem ersten Schlitten (3) angebracht ist, der geeignet ist, sich innerhalb einer Leitung verschieblich zu bewegen, mit wenigstens einem Hämmerwerkzeug, das geeignet ist, sich im Bereich der Schweißnähte (6) gegenüber dem ersten Schlitten in Längsrichtung (XX) relativ verschieblich und um die axiale Längsachse (XX) der Leitung drehend zu bewegen, wie dies in einem der Ansprüche 9 bis 15 definiert ist.

10c 10a 10b

10

15

1c,1

1a,1

1b,1

FIG.1

R₂

R₀

R₁

13

R∞

14b 14a 14c

14

1

FIG.1A

12

11

R∞

# FIG.2

# FIG.2A

EP 2 132 474 B1

FIG.3

FIG.3A

FIG.3A'

FIG.3B

FIG.3B'

FIG.3C

FIG.3C'

FIG.3D

FIG.3E

FIG.3F

# FIG.4A

**9**

**18**

**8**

**2N**

**2**

# FIG.4D

$2_1$  $2_2$  $2_3$  $2_4$  $2$  $2_5$

2a   2b   2c   2d

# FIG.4B

X

**2N**

**2P**

X

# FIG.4C

X

**2N**

**7₁**

**6**

**7₂**

**2P**

X

EP 2 132 474 B1

**FIG.5**

**FIG.6**

**FIG.5A**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2791293
- US 3937055 A
- FR 0504848